# EUROPÄISCHE PATENTANMELDUNG

(11) **EP 0 724 090 A1**
(43) Veröffentlichungstag der Anmeldung: **31.07.1996**
(21) Anmeldenummer: 95119596.5
(22) Anmeldetag: 13.12.1995
(51) Int. Cl.: F16F 9/43, F16F 9/36

(54) **Mit Fluid gefüllte Zylinder-Kolbenstangen-Einheit, insbesondere Gasfeder**

(30) Priorität: 25.01.1995 DE 19502161
(71) Anmelder: SUSPA COMPART Aktiengesellschaft, D-90518 Altdorf (DE)
(72) Erfinder: Bauer, Hans-Peter, D-90518 Altdorf (DE)
(74) Vertreter: Rau, Manfred, Dr. Dipl.-Ing.

(57) **Zusammenfassung**

Eine mit Fluid gefüllte Zylinder-Kolbenstangen-Einheit weist ein Gehäuse (1) auf, das am Austritt einer Kolbenstange (3) eine Führung mit einer Dichtung aufweist. Im Bereich der Führung ist an der Innenwand (7) des Gehäuses (1) ein zum Kolben (6) hin versetzter Überbrückungs-Kanal (20) ausgebildet, der mit einer Außen-Dichtung (12) zum Füllen des Gehäuses (1) mit einem unter Druck stehenden Fluid, insbesondere Druckgas, in Überdeckung bringbar ist.

## Beschreibung

Die Erfindung betrifft eine mit Fluid gefüllte Zylinder-Kolbenstangen-Einheit, insbesondere eine Gasfeder.

Bei derartigen Einheiten handelt es sich in der Regel um Gasfedern, die zumindest teilweise mit Druckgas und gegebenenfalls zu einem Teil mit Öl gefüllt sind. Darüber hinaus handelt es sich sehr oft um Stoßdämpfer, die im wesentlichen mit Öl gefüllt sind und einen gasgefüllten Ausgleichsraum aufweisen. Wenn in der Folge von Gasfedern gesprochen wird, dann umfaßt dies immer auch die durch die allgemeine Definition abgedeckten Einheiten, insbesondere also Gasfedern, die im wesentlichen nur mit Druckgas gefüllt sind, Gasfedern, die außer mit Druckgas auch zu einem nicht unwesentlichen Teil mit Öl gefüllt sind und Stoßdämpfer, die zur einem wesentlichen Teil mit Öl und nur zu einem geringeren Teil mit Gas gefüllt sind. Diese Einheiten weisen in der Regel ein im wesentlichen zylindrisches Gehäuse auf, in dem koaxial eine Kolbenstange verschiebbar angeordnet ist. Diese weist an ihrem im Gehäuse befindlichen Ende einen Kolben auf, der als Dämpfungskolben ausgebildet sein kann. Am kolbenstangenaustrittsseitigen Ende des Gehäuses ist eine Führung angebracht, die auch eine Dichtungseinheit aufnimmt. Letztere umfaßt eine dichtend an der Innenwand des Gehäuses anliegende Außen-Dichtung und eine an der Kolbenstange anliegende Innen-Dichtung. Die Außen-Dichtung und die Innen-Dichtung können einstückig ausgebildet sein. Da die Kolbenstange gegenüber der Innen-Dichtung bewegt wird, ist die Innen-Dichtung in der Regel als sogenannte Lippendichtung ausgebildet, d.h. die Lippen liegen dichtend an der Kolbenstange an. Das Füllen dieser Gasfedern mit Druckgas erfolgt üblicherweise derart, daß das Druckgas durch den sehr engen Ringspalt zwischen der Führung und der Kolbenstange und zwischen den Lippen der Innen-Dichtung und der Kolbenstange hindurch in das Innere des Gehäuses gedrückt wird. Dies ist möglich, weil die Lippen eine Dichtcharakteristik haben, wonach sie primär unter dem im Gehäuse herrschenden Gasdruck gegen die Kolbenstange gedrückt werden. In der Praxis hat sich gezeigt, daß beim Füllen der Gasfeder wegen des notwendigen Überdruckes zum Öffnen der Dichtung ein Einhalten einer engen Toleranz für die Ausschubkraft problematisch ist.

Der Erfindung liegt die Aufgabe zugrunde, eine Gasfeder so auszugestalten, daß eine Füllung ohne über den Soll-Fülldruck hinausgehenden Überdruck möglich ist.

Diese Aufgabe wird erfindungsgemäß durch die Merkmale des Anspruches 1 gelöst. Die erfindungsgemäßen Maßnahmen haben zur Folge, daß das Füllen der Gasfeder durch den oder die Ringspalte zwischen Führung und Innenwand des Gehäuses und durch den beim Füllen die Außen-Dichtung überbrückenden Überbrückungs-Kanal erfolgt. Auch eine Mikro-Beschädigung der ohnehin weniger empfindlichen Außen-Dichtung ist hierbei ausgeschlossen. Das Füllen erfolgt in der Weise, daß das aus Führung und Dichtung bestehende Paket während des Füllens in eine Position verschoben wird, in der die Außen-Dichtung vom Überbrückungs-Kanal überbrückt wird. Nach dem Füllen wird dieses Paket wieder nach außen verschoben, so daß die Außen-Dichtung rundum dichtend an der Innenwand anliegt. In dieser Position werden dann die Führung und die Dichtungen in Achsrichtung des Gehäuses fest mit diesem verbunden.

Weitere vorteilhalte Ausgestaltungen ergeben sich aus den Unteransprüchen.

Weitere Merkmale, Vorteile und Einzelheiten der Erfindung ergeben sich im übrigen aus der Beschreibung eines Ausführungsbeispiels anhand der Zeichnung. Es zeigt
Fig. 1 eine Gasfeder im Längsschnitt und
Fig. 2 das Gehäuse der Gasfeder vor deren Montage im Längsschnitt.

Die in der Zeichnung dargestellte Gasfeder weist ein im wesentlichen aus einem zylindrischen Rohr bestehendes Gehäuse 1 mit einer Mittel-Längs-Achse 2 und einer koaxial zur Achse 2 angeordneten, im Gehäuse 1 verschiebbaren Kolbenstange 3 auf. Die Kolbenstange 3 ist an einem Ende 4 des Gehäuses 1 aus diesem herausgeführt. Am anderen Ende 5 ist das Gehäuse 1 gasdicht verschlossen.

An ihrem im Gehäuse 1 befindlichen Ende ist die Kolbenstange 3 mit einem Kolben 6 versehen, der an der Innenwand 7 des Gehäuses 1 gefühlt ist. Der Kolben 6 ist in üblicher Weise als sogenannter Dämpfungskolben ausgebildet, und zwar mit unterschiedlicher Dämpfungscharakteristik für das Einschieben der Kolbenstange 3 in das Gehäuse 1 bzw. für das Ausfahren der Kolbenstange 3 aus dem Gehäuse 1.

Die Kolbenstange 3 ist am Ende 4 des Gehäuses 1 in einer Führung abgedichtet geführt. Die Führung selber besteht aus zwei Teilen, nämlich einer Anschlag- und Distanz-Hülse 8 mit einem Führungsabschnitt 9 für die Kolbenstange 3 und aus einem Führungs-Ring 10. Die Hülse 8 ist dem Kolben 6 zugewandt, wobei auch der Führungsabschnitt 9 dem Kolben 6 zugewandt ist. Der Führungs-Ring 10 ist dem Ende 4 des Gehäuses 1 zugewandt. Zwischen der Hülse 8 und dem Ring 10 ist eine Dichtung 11 angeordnet, die mit einem Außen-Dichtungsring 12 gegen die Innenwand 7 des Gehäuses 1 dichtend anliegt. Sie weist weiterhin einen einstückig mit dem Außen-Dichtungsring 12 ausgebildeten Innen-Dichtungsring 13 auf, der dichtend gegen die Kolbenstange 3 anliegt. Dieser Innen-Dichtungsring 13 kann mit an der Kolbenstange 3 anliegenden Dichtungslippen ausgebildet sein, die verhältnismäßig empfindlich sind.

Die Hülse 8 weist eine Außen-Umfangsnut 14 auf, in die eine im Gehäuse 1 ausgebildete, zur Achse 2 hin vorspringende umlaufende Sicke 15 eingreift, wodurch die Anschlag- und Distanzhülse 8 mit dem Gehäuse 1 fest verbunden wird und wodurch ihre Lege in Richtung der Achse 2 relativ zum Gehäuse 1 definiert wird. Das Gehäuse 1 ist am Ende 4 mit einer den Führungs-Ring 10 umgreifenden Umbördelung 16 versehen, wodurch wiederum der Führungs-Ring 10 im Gehäuse 1 festgelegt wird. Durch das Einrollen der Sicke 15 einerseits und das Anbringen der Umbördelung 16 andererseits wird auch der Abstand des Führungs-Rings 10 von der Hülse 8 und damit die Vorspannung der Dichtung 11 in Richtung der Achse 2 zwischen dem Ring 10 und der Hülse 8 vorgegeben. Durch diese Vorspannung in Richtung der Achse 2 erfolgt eine Verspannung in radialer Richtung, d.h. durch diese Vorspannung in Richtung der Achse 2 wird auch die Anpreßkraft vorgegeben, mit der der Außen-Dichtungsring 11 gegen die Innenwand 7 und der Innen-Dichtungsring 13 gegen die Kolbenstange 3 anliegt.

In der Innenwand 7 des Gehäuses 1 ist ein durch eine Längssicke gebildeter Überström-Kanal 17 ausgebildet, durch den Druckgas am Kolben 6 vorbei aus dem zwischen dem Kolben 6 und dem verschlossenen Ende 5 begrenzten Gehäuseraum 18 in den zwischen dem Kolben 6 und der Führung begrenzten Gehäuseraum 19 und umgekehrt strömen kann. Das Gehäuse 1 ist teilweise oder vollständig mit Druckgas gefüllt.

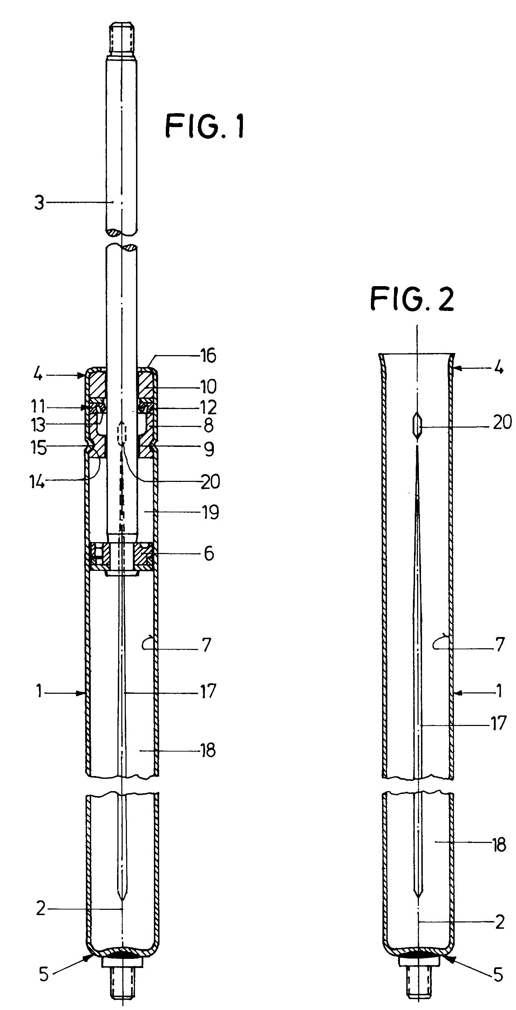

Fluchtend mit dem Überström-Kanal 17, aber von diesem getrennt, ist ein Überbrückungs-Kanal 20 in der Innenwand 7 des Gehäuses 1 ausgebildet, der ebenfalls durch eine - allerdings relativ kurze - Längssicke gebildet ist. Dieser Überbrückungs-Kanal 20 ist in Richtung der Achse 2 an einer Stelle der Innenwand 7 des Gehäuses 1 ausgebildet, die bei entsprechend Fig. 1 fertig montierter Gasfeder in Überdeckung mit der Anschlag- und Distanz-Hülse 8 sich befindet. In fertig montiertem Zustand der Gasfeder befindet sich dieser Überbrückungs-Kanal 20 nicht in auch nur teilweiser Überdeckung mit der Dichtung 11, sondern ist gegenüber dieser zum Gehäuseraum 19 hin versetzt. Dieser Überbrückungs-Kanal 20 hat eine Länge in Richtung der Achse 2, die etwa der axialen Länge der Dichtung 11, und zwar insbesondere ihres Außen-Dichtungsrings 12 in noch nicht zusammengepreßtem Zustand, entspricht bzw. geringfügig größer ist.

Die Montage und das Füllen der Gasfeder mit Druckgas geht wie folgt vor sich:
Der Kolben 6 ist an der Kolbenstange 3 angebracht. Die Anschlag- und Distanz-Hülse 8, die Dichtung 11 und der Führungs-Ring 10 sind auf die Kolbenstange 3 aufgeschoben, und zwar bis zum Anschlag gegen den Kolben 6. Die Kolbenstange 3 wird in das offene Ende 4 des Gehäuses 1 eingeschoben, wobei der Kolben 6, die Hülse 8, die Dichtung 11 und der Ring 10 gegen die Innenwand 7 des Gehäuses 1 anliegen. Das Einschieben erfolgt so weit, bis die Dichtung 11 mit ihrem Außen-Dichtungsring 12 den Überbrückungs-Kanal 20 überdeckt, von diesem also überbrückt wird.

Dann wird von außen Druckgas durch das Ende 4 des Gehäuses 1 eingeführt, das durch den schmalen Ringspalt zwischen dem Führungs-Ring 10 und der Innenwand 7, außen um den Außen-Dichtungsring 12 durch den Überbrückungs-Kanal 20 herum und durch den schmalen Ringspalt zwischen der Hülse 8 und der Innenwand 7 in die Gehäuseräume 18, 19 strömt. Unabhängig von der Konstruktion des Kolbens 6 wird der Kolben 6 hierbei auch durch den Überström-Kanal 18 überbrückt. Wenn das Gehäuse 1 mit Druckgas gefüllt ist, wird die bis jetzt festgehaltene Führung insoweit gelöst, daß sie durch den Gasdruck in ihre endgültige Position relativ zum Gehäuse 1 in Richtung auf das Ende 4 hin verschoben wird. In dieser Position ist der Außen-Dichtungsring 12 nicht mehr durch den Überbrückungs-Kanal 20 überbrückt, sondern liegt rundum dichtend gegen die Innenwand 7 des Gehäuses 1 an. Jetzt werden die Sicke 15 und die Umbördelung 16 erzeugt. Das Gehäuse 1 ist auch am Ende 4 gasdicht verschlossen.

## Patentansprüche

1. Mit Fluid gefüllte Zylinder-Kolbenstangen-Einheit, insbesondere Gasfeder mit folgenden Merkmalen:
- ein eine Mittel-Längs-Achse (2) aufweisendes, im wesentlichen zylindrisches Gehäuse (1), das ein verschlossenes erstes Ende (5) und ein zweites Ende (4) und eine Innenwand (7) aufweist,
- eine teilweise im Gehäuse (1) und teilweise außerhalb des Gehäuses (1) koaxial zur Mittel-Längs-Achse (2) angeordnete Kolbenstange (3),
- ein an der Kolbenstange (3) angebrachter, der Innenwand (7) zugeordneter Kolben (6),
- eine am zweiten Ende (4) des Gehäuses (1) angeordnete Führung zur Führung der Kolbenstange (3) in Richtung der Mittel-Längs-Achse (2),
- eine im Bereich der Führung angeordnete, gegen die Innenwand (7) dichtend anliegende Außen-Dichtung (Außen-Dichtungsring 12),
- eine im Bereich der Führung angeordnete, gegen die Kolbenstange (3) dichtend anliegende Innen-Dichtung (Innen-Dichtungsring 13) und
- ein im Bereich der Führung in der Innenwand (7) des Gehäuses (1) ausgebildeter, gegenüber der Außen-Dichtung (Außen-Dichtungsring 12) zum Kolben (6) hin versetzter Überbrückungs-Kanal (20) mit einer der Außen-Dichtung (Außen-Dichtungsring 12) etwa entsprechenden Erstreckung in Richtung der Mittel-Längs-Achse (2).

2. Zylinder-Kolbenstangen-Einheit nach Anspruch 1, wobei die Erstreckung des Überbrückungs- Kanals (20) geringfügig größer ist als die Erstreckung der Außen-Dichtung (Außen-Dichtungsring 12) in Richtung der Mittel-Längs-Achse (2).

3. Zylinder-Kolbenstangen-Einheit nach Anspruch 1 oder 2, wobei in der Innenwand (7) des Gehäuses (1) ein zur Überbrückung des Kolbens (6) dienender Überström- Kanal (17) ausgebildet ist, der mit dem Überbrückungs-Kanal (20) fluchtet.

4. Zylinder-Kolbenstangen-Einheit nach einem der Ansprüche 1 bis 3, wobei der Überbrückungs- Kanal (20) und gegebenenfalls der Überström-Kanal (17) jeweils durch eine Längssicke in der Innenwand (7) des Gehäuses (1) gebildet ist.
